# EUROPEAN PATENT APPLICATION

(11) **EP 4 742 221 A1**
(43) Date of publication of application: **13.05.2026**
(21) Application number: 24854361.3
(22) Date of filing: 02.08.2024
(51) Int. Cl.: G09F 9/30, C08F 220/14, C08F 220/18, C08F 2/44, C08K 5/04, C09D 4/00, C09D 133/06, C09D 167/02

(54) **ELECTRONIC DEVICE COMPRISING SELF-HEALING PROTECTIVE LAYER**

(30) Priority: 11.08.2023 KR 20230105947; 30.08.2023 KR 20230114419
(71) Applicant: Samsung Electronics Co., Ltd., Suwon-si, Gyeonggi-do 16677 (KR); Soongsil University Foundation of University-Industry Cooperation, Seoul 06978 (KR)
(72) Inventor: LEE, Junghyun, Suwon-si Gyeonggi-do 16677 (KR); CHUNG, Jaewoo, Seoul 06978 (KR); PARK, Junho, Suwon-si Gyeonggi-do 16677 (KR); LEE, Geunho, Suwon-si Gyeonggi-do 16677 (KR); JUNG, Sunghoon, Suwon-si Gyeonggi-do 16677 (KR); YU, Yeongjun, Seoul 06978 (KR)
(74) Representative: Walaski, Jan Filip
(86) International application number: PCT/KR2024/011417
(87) International publication number: WO 2025/037809

(57) **Abstract**

The present disclosure relates to a protective layer having self-healing characteristics and shape memory characteristics on one surface of a display panel. To this end, the protective layer can be manufactured from a product composed of methyl methacrylate (MMA), hexyl methacrylate (HMA) and cinnamoyl (Ci) mixed in a predetermined ratio by which predetermined optical transparency, predetermined rigidity or predetermined recovery against plastic deformation can be ensured. Other various embodiments are possible.

## Description

### [Technical Field]

Various embodiments of the disclosure relate to a protective layer having self-healing characteristics and shape memory characteristics and an electronic device comprising the same.

### [Background Art]

An electronic device requires a small profile for portability and requires a large-area display for providing users with substantial information. To achieve compatibility between a small profile and a large-area display in an electronic device, various form factors such as rollable, slidable, or foldable are emerging, departing from the rectangular bar-shaped form factor. An electronic device having such a form factor requires a flexible display which is bendable or foldable.

A display of an electronic device may include a protective layer to prevent foreign objects from entering from above a panel layer. The protective layer may be provided with at least a portion formed of a flexible material corresponding to flexible characteristics of a flexible display.

As a flexible display is bent or folded with increased frequency or number of times, stress exceeding an elastic limit of the protective layer (e.g., yield strength) may be applied, causing plastic deformation. In this case, the flexible display may experience distortion or decreased transparency due to creases or scratches.

### [Technical Problems]

Various embodiments of the disclosure propose a protective layer formed of a material capable of self-healing and shape memory while having predetermined rigidity and transmittance, and an electronic device including the same.

### [Solution to Problems]

A display device according to an embodiment of the disclosure may include a display panel provided with a protective layer capable of self-healing on one surface exposed to an outside. The protective layer may be manufactured by a product composed of methylmethacrylate (MMA), hexylmethacrylate (HMA), and cinnamoyl (Ci) mixed in a predetermined ratio capable of securing predetermined optical transparency, predetermined rigidity, or predetermined recoverability against plastic deformation.

An electronic device according to an embodiment of the disclosure may include a first housing, a second housing foldably connected to the first housing through a hinge module, and a flexible display supported by the first housing and the second housing. The flexible display may include a protective layer manufactured by a product composed of methylmethacrylate (MMA), hexylmethacrylate (HMA), and cinnamoyl (Ci) mixed in a predetermined ratio capable of securing predetermined optical transparency, predetermined rigidity, or predetermined recoverability against plastic deformation.

### [Advantageous Effects]

An electronic device according to an embodiment of the disclosure may provide a protective layer that self-restores in response to plastic deformation caused by compression and tension of a display.

An electronic device according to an embodiment of the disclosure may enhance durability of a display appearance by providing a protective layer composed of a material capable of reversible self-healing.

### [BRIEF DESCRIPTION OF DRAWINGS]

FIG. 1 is a block diagram illustrating an electronic device in a network environment according to various embodiments.
FIG. 2A is a perspective view illustrating a foldable electronic device in an unfolded state of an electronic device according to an embodiment of the disclosure;
FIG. 2B is a perspective view illustrating a foldable electronic device in a folded state of an electronic device according to an embodiment of the disclosure;
FIG. 2C is a perspective view illustrating an electronic device in an intermediate state of an electronic device according to an embodiment of the disclosure;
FIG. 3 is an exploded perspective view illustrating an electronic device according to an embodiment of the disclosure;
FIG. 4 is a cross-sectional view illustrating a display according to an embodiment of the disclosure;
FIG. 5 is a cross-sectional view illustrating a display according to an embodiment of the disclosure;
FIG. 6 is a flowchart for manufacturing a self-healing polymer to be used as a protective layer of a display, according to an embodiment of the disclosure;
FIG. 7 illustrates a bonding structure of a self-healing polymer, according to an embodiment of the disclosure;
FIG. 8 illustrates deformation of a protective layer manufactured with a self-healing polymer and the corresponding recovery process, according to an embodiment of the disclosure;
FIG. 9A is a view illustrating an unfolded state of an electronic device, according to an embodiment of the disclosure;
FIG. 9B is a view illustrating a folded state of an electronic device, according to an embodiment of the disclosure;
FIG. 9C is an exploded perspective view illustrating an electronic device, according to an embodiment of the disclosure;
FIG. 10A is a view illustrating an extended state of an electronic device, according to an embodiment of the disclosure; and
FIG. 10B is a view illustrating a retracted state of an electronic device, according to an embodiment of the disclosure.

In relation to the description of the drawings, the same or similar reference numerals may be used for the same or similar components.

### [MODE FOR THE INVENTION]

Hereinafter, embodiments of the disclosure are described in detail with reference to the drawings so that those skilled in the art to which the disclosure pertains may easily practice the disclosure. However, the disclosure may be implemented in other various forms and is not limited to the embodiments set forth herein. The same or similar reference denotations may be used to refer to the same or similar elements throughout the specification and the drawings. Further, for clarity and brevity, no description is made of well-known functions and configurations in the drawings and relevant descriptions.

Hereinafter, an electronic device to be described may include a flexible display that is at least one of a foldable display, a rollable display, a slidable display, or a stretchable display. The flexible display may deform due to folding or bending. The folding or bending of the flexible display may be referred to as "deformation," which may mean all deformations occurring at specific points according to characteristics of the flexible display.

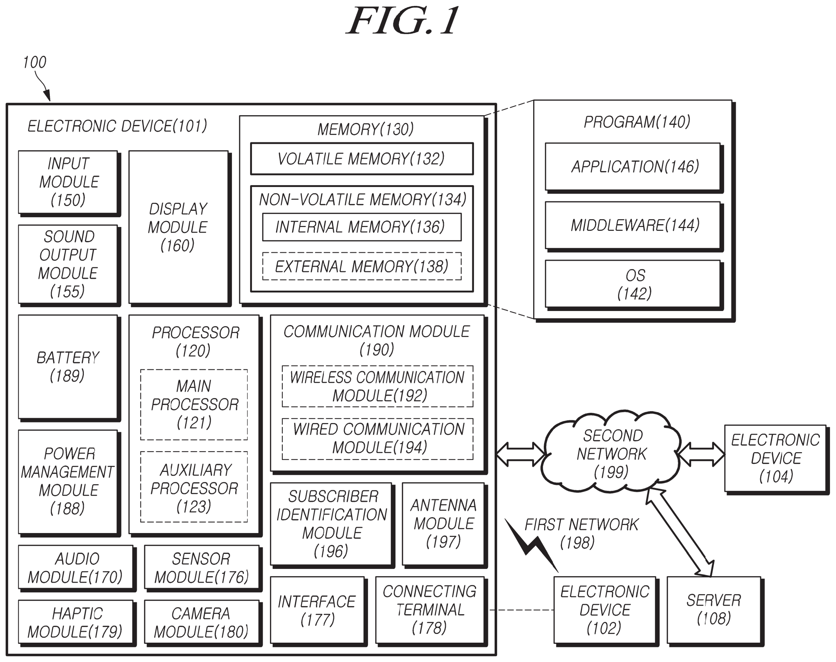

FIG. 1 is a block diagram illustrating an electronic device 101 in a network environment 100, according to various embodiments.

Referring to FIG. 1, an electronic device 101 in a network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, in case that the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., the electronic device 102) directly (e.g., wiredly) or wirelessly coupled with the electronic device 101.

The sensor module 176 may detect an operation state (e.g., power or temperature) of the electronic device 101 or an external environmental state (e.g., the user's state), and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

The connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wiredly) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as Bluetooth^{™}, wireless-fidelity (Wi-Fi^{™}) direct, or infrared data association (IrDA)) or the second network 199 (e.g., a long-range communication network, such as a legacy cellular network, a fifth generation (5G) network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a fourth generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the millimeter wave (mmWave) band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices (e.g., the electronic devices 102 and 104 and the server 108). For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

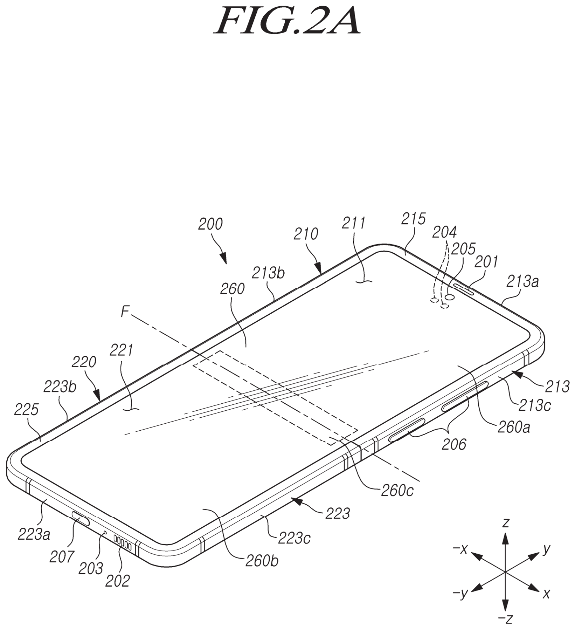

FIG. 2A is a perspective view illustrating an electronic device 200 (e.g., the electronic device 101 of FIG. 1) in an unfolded state according to an embodiment of the disclosure.

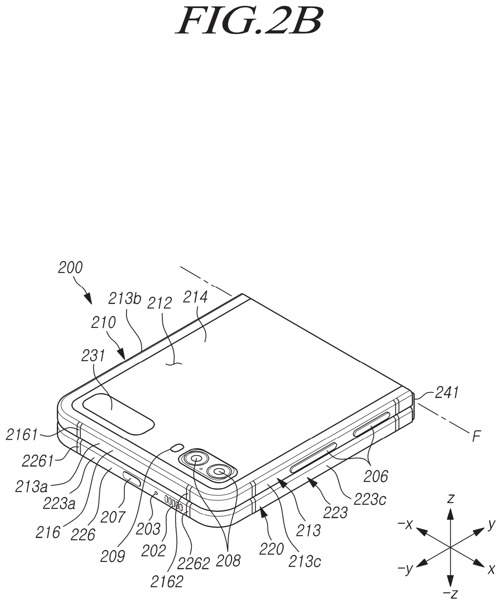

FIG. 2B is a perspective view illustrating an electronic device 200 in a folded state according to an embodiment.

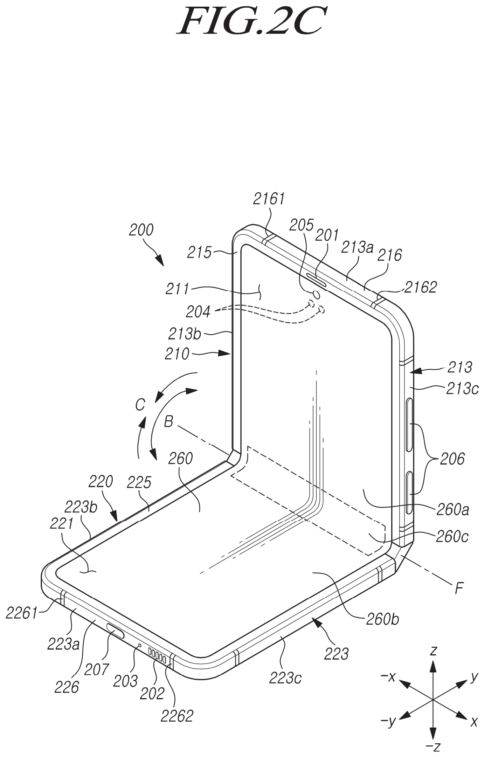

FIG. 2C is a perspective view illustrating an electronic device 200 in an intermediate state according to an embodiment.

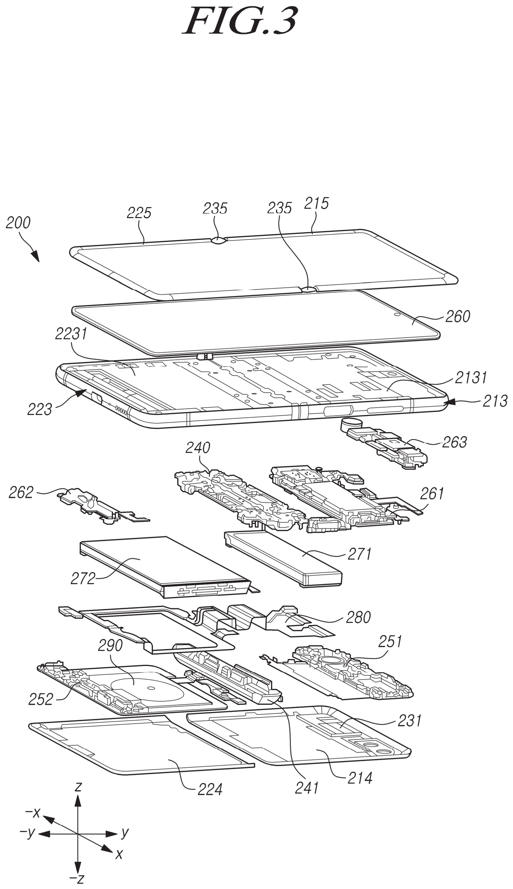

FIG. 3 is an exploded perspective view illustrating an electronic device 200 according to an embodiment.

Referring to FIG. 2A to FIG. 2C and FIG. 3, an electronic device 200 may include a pair of housings 210 and 220 (e.g., a foldable housing) rotatably coupled to be folded about a hinge module 240 while facing each other. According to an embodiment, the electronic device 200 may include a flexible display 260 (e.g., the display 160 of FIG. 1) disposed in an area formed by the pair of housings 210 and 220. According to an embodiment, a first housing 210 and a second housing 220 may be disposed on two opposite sides of the folding axis (axis F) and be substantially symmetrical in shape with respect to the folding axis (e.g., axis F). According to an embodiment, the first housing 210 and the second housing 220 may form different angles or distances depending on whether the foldable electronic device 200 is in an unfolded state (or flat state), a folded state, or an intermediate state.

The pair of housings 210 and 220 may include the first housing 210 (e.g., a first housing structure) coupled to the hinge module 240 and the second housing 220 (e.g., a second housing structure) coupled to the hinge module 240. According to an embodiment, the first housing 210 may include a first surface 211 facing in a first direction (e.g., front direction) (z-axis direction) and a second surface 212 facing in a second direction (e.g., rear direction) (-z-axis direction) opposite to the first surface 211, in the unfolded state.

According to an embodiment, the second housing 220 may include a third surface 221 facing in the first direction (z-axis direction) and a surface facing in the second direction (-z-axis direction), in the unfolded state. Hereinafter, the surface facing in the second direction is referred to as a fourth surface (not illustrated). According to an embodiment, the electronic device 200 may be operated in such a manner where in the unfolded state, the first surface 211 of the first housing 210 and the third surface 221 of the second housing 220 face in substantially the same first direction (z-axis direction) and, in the folded state, the first surface 211 and the third surface 221 face each other.

According to an embodiment, the electronic device 200 may be operated in such a manner where in the unfolded state, the second surface 212 of the first housing 210 and the fourth surface positioned on the rear surface (e.g., -z-axis direction) of the second housing 220 face in substantially the same second direction (-z-axis direction) and, in the folded state, the second surface 212 and the fourth surface face in opposite directions to each other. For example, in the folded state, the second surface 212 may face in the first direction (z-axis direction), and the fourth surface may face in the second direction (-z-axis direction).

According to an embodiment, the first housing 210 may include a first side frame 213 at least partially forming the appearance of the electronic device 200 and a first rear cover 214 coupled with the first side frame 213 and forming at least a portion of the second surface 212 of the electronic device 200. According to an embodiment, the first side frame 213 may include a first side surface 213a, a second side surface 213b extending from an end of the first side surface 213a, and a third side surface 213c extending from the other end of the first side surface 213a. According to an embodiment, the first side frame 213 may be formed in a rectangular (or square) shape through the first side surface 213a, the second side surface 213b, and the third side surface 213c.

According to an embodiment, the second housing 220 may include a second side frame 223 at least partially forming the appearance of the electronic device 200 and a second rear cover 224 coupled with the second side frame 223 and forming at least a portion of the fourth surface of the electronic device 200. According to an embodiment, the second side frame 223 may include a fourth side surface 223a, a fifth side surface 223b extending from an end of the fourth side surface 223a, and a sixth side surface 223c extending from the other end of the fourth side surface 223a. According to an embodiment, the second side frame 223 may be formed in a rectangular shape through the fourth side surface 223a, the fifth side surface 223b, and the sixth side surface 223c.

According to an embodiment, the pair of housings 210 and 220 is not limited to the shape and coupling shown but may rather be implemented in other shapes or via a combination and/or coupling of other components. For example, in an embodiment, the first side frame 213 may be integrally formed with the first rear cover 214, and the second side frame 223 may be integrally formed with the second rear cover 224.

According to an embodiment, in the unfolded state of the electronic device 200, the second side surface 213b of the first side frame 213 may be connected with the fifth side surface 223b of the second side frame 223 without a gap. According to an embodiment, in the unfolded state of the electronic device 200, the third side surface 213c of the first side frame 213 may be connected with the sixth side surface 223c of the second side frame 223 without a gap. According to an embodiment, in the unfolded state of the electronic device 200, the sum of the lengths of the second side surface 213b and the fifth side surface 223b may be configured to be larger than the length of the first side surface 213a and/or the fourth side surface 223a. Further, the sum of the lengths of the third side surface 213c and the sixth surface 223c may be configured to be larger than the length of the first side surface 213a and/or the fourth side surface 223a.

According to an embodiment, the first side frame 213 and/or the second side frame 223 may be formed of metal or may further include a polymer injected into the metal. According to an embodiment, the first side frame 213 and/or the second side frame 223 may include at least one conductive portion 216 and/or 226 electrically segmented through at least one segmenter 2161, 2162, and/or 2261 or 2262 formed of a polymer. In this case, the at least one conductive portion may be electrically connected with a wireless communication circuit included in the electronic device 200 and be thus used as an antenna operating in at least one designated band (e.g., a legacy band).

According to an embodiment, the first rear cover 214 and/or the second rear cover 224 may be formed of at least one of, or a combination of at least two of, coated or colored glass, ceramic, polymer, or metal (e.g., aluminum, stainless steel (STS), or magnesium).

According to an embodiment, the flexible display 260 may be disposed from the first surface 211 of the first housing 210 across the hinge module 240 up to at least a portion of the third surface 221 of the second housing 220. For example, the flexible display 260 may include a first flat portion 260a substantially corresponding to the first surface 211, a second flat portion 260b corresponding to the third surface 221, and a bendable portion 260c connecting the first flat portion 260a and the second flat portion 260b and corresponding to the hinge module 240. According to an embodiment, the electronic device 200 may include a first protective cover 215 (e.g., first protective frame or first decoration member) coupled along the edge of the first housing 210. According to an embodiment, the electronic device 200 may include a second protective cover 225 (e.g., second protective frame or second decoration member) coupled along the edge of the second housing 220. According to an embodiment, the first protective cover 215 and/or the second protective cover 225 may be formed of a metal or polymer material. According to an embodiment, the first protective cover 215 and/or the second protective cover 225 may be used as a decoration member. According to an embodiment, the flexible display 260 may be positioned such that an edge of the first flat portion 260a is interposed between the first housing 210 and the first protective cover 215. According to an embodiment, the flexible display 260 may be positioned such that an edge of the second flat portion 260b is interposed between the second housing 220 and the second protective cover 225. According to an embodiment, the flexible display 260 may be positioned such that the edge of the flexible display 260 corresponding to a protective cap 235 is protected through the protective cap 235 disposed in the area corresponding to the hinge module 240. Accordingly, the edge of the flexible display 260 may be substantially protected from the outside.

According to an embodiment, the electronic device 200 may include a hinge housing 241 (e.g., hinge cover) that supports the hinge module 240 and is disposed to be exposed to the outside in the folded state of the electronic device 200 and, in the unfolded state of the electronic device 200, is drawn in a first space and a second space not to be seen from the outside.

According to an embodiment, the electronic device 200 may include a sub display 231 disposed separately from the flexible display 260. According to an embodiment, as the sub display 231 is disposed on the second surface 212 of the first housing 210 to be at least partially exposed, the sub display 231 may display status information about the electronic device 200 which replaces the display function of the flexible display 260, in the folded state. According to an embodiment, the sub display 231 may be disposed to be viewed from the outside through at least a partial area of the first rear cover 214. In an embodiment, the sub display 231 may be disposed on the fourth surface of the second housing 220. In this case, the sub display 231 may be disposed to be visible from the outside through at least a partial area of the second rear cover 224.

According to an embodiment, the electronic device 200 may include at least one of an input device (e.g., microphone), sound output devices 201, 202 (e.g., the audio module 170 of FIG. 1), a sensor module 204 (e.g., the sensor module 176 of FIG. 1), a camera device (e.g., the input module 150 of FIG. 1, first camera device 205, and/or second camera device 208), a key input device 206 (e.g., the input module 150 of FIG. 1), or a connector port 207 (e.g., the interface 177 of FIG. 1). In the illustrated embodiment, the input device (e.g., the microphone), sound output devices 201 and 202, the sensor module 204, the camera device (e.g., the first camera device 205 and/or the second camera device 208), the key input device 206, or the connector port 207 refer to a hole or shape formed in the first housing 210 or the second housing 220, but may be defined to include a substantial electronic component (e.g., an input device, a sound output device, a sensor module, or a camera device) disposed inside the electronic device 200 and operating through the hole or shape.

According to an embodiment, the input device may include at least one microphone 203 disposed in the second housing 220. In an embodiment, the input device may include a plurality of microphones 203 disposed to detect the direction of the sound. In an embodiment, the plurality of microphones 203 may be disposed at appropriate positions in the first housing 210 and/or the second housing 220. According to an embodiment, the sound output devices 201 and 202 may include speakers. According to an embodiment, the speakers may include a call receiver 201 disposed in the first housing 210 and a speaker 202 disposed in the second housing 220. In an embodiment, the input device, the sound output devices 201 and 202, and the connector port 207 may be disposed in a space provided in the first housing 210 and/or the second housing 220 of the electronic device 200 and may be exposed to an external environment through at least one hole formed in the first housing 210 and/or the second housing 220. According to an embodiment, the at least one connector port 207 may be used to transmit and receive power and/or data to and from an external electronic device. In an embodiment, at least one connector port (e.g., an ear jack hole) may receive a connector (e.g., an ear jack) for transmitting and receiving an audio signal to and from an external electronic device. In an embodiment, the holes formed in the first housing 210 and/or the second housing 220 may be commonly used for the input device and the sound output devices 201 and 202. In an embodiment, the sound output devices 201 and 202 may include speakers (e.g., piezo speakers) that operate without holes formed in the first housing 210 and/or the second housing 220.

According to an embodiment, the sensor module 204 may generate an electrical signal or a data value corresponding to an internal operating state of the electronic device 200 or an external environmental state. The sensor module 204 may detect, e.g., an external environment through the first surface 211 of the first housing 210. In an embodiment, the electronic device 200 may further include at least one sensor module disposed to detect an external environment through the second surface 212 of the first housing 210. According to an embodiment, the sensor module 204 (e.g., an illuminance sensor) may be disposed under the flexible display 260 to detect an external environment through the flexible display 260. According to an embodiment, the sensor module 204 may include at least one of a gesture sensor, a gyro sensor, an atmospheric pressure sensor, a magnetic sensor, an acceleration sensor, a grip sensor, a color sensor, an infrared (IR) sensor,, a temperature sensor, a humidity sensor, a proximity sensor, a biometric sensor, an ultrasonic sensor, or an illuminance sensor.

According to an embodiment, a camera device (e.g., the first camera device 205 and/or the second camera device 208) may include a first camera device 205 (e.g., a front camera device) disposed on the first surface 211 of the first housing 210 and a second camera device 208 disposed on the second surface 212 of the first housing 210. The electronic device 200 may further include a flash 209 disposed near the second camera device 208. According to an embodiment, a camera device (e.g., the first camera device 205 and/or the second camera device 208) may include one or more lenses, an image sensor, and/or an image signal processor. The flash 209 may include, e.g., a light emitting diode or a xenon lamp. According to an embodiment, the camera device (e.g., the first camera device 205 and/or the second camera device 208) may be disposed so that two or more lenses (a wide-angle lens, an ultra-wide-angle lens, or a telephoto lens) and image sensors are positioned on one surface (e.g., the first surface 211, the second surface 212, the third surface 221, or the fourth surface) of the electronic device 200. In an embodiment, the camera device (e.g., the first camera device 205 and/or the second camera device 208) may include time of flight (TOF) lenses and an image sensor.

According to an embodiment, the key input device 206 (e.g., a key button) may be disposed on the third side surface 213c of the first side frame 213 of the first housing 210. In an embodiment, the key input device 206 may be disposed on at least one of the other side surfaces 213a and 213b of the first housing 210 and/or the side surfaces 223a, 223b, and 223c of the second housing 220. In an embodiment, the electronic device 200 may not include some or all of the key input devices 206, and the key input devices 206 not included may be implemented in other forms, such as a soft key, on the flexible display 260. In an embodiment, the key input device 206 may be implemented using a pressure sensor included in the flexible display 260.

According to an embodiment, some of the camera devices (e.g., the first camera device 205 and/or the second camera device 208) or the sensor module 204 may be disposed to be exposed through the flexible display 260. For example, the first camera device 205 or the sensor module 204 may be disposed to contact an external environment through an opening (e.g., a through hole) at least partially formed in the flexible display 260 in the internal space of the electronic device 200. In another embodiment, some sensor modules 204 may be disposed to perform their functions without being visually exposed through the flexible display 260 in the internal space of the electronic device 200. For example, in this case, the area of the flexible display 260 facing the sensor module may not need an opening.

Referring to FIG. 2C, the electronic device 200 may be operated to maintain an intermediate state through the hinge module 240. In this case, the electronic device 200 may control the flexible display 260 to display different contents in the display area corresponding to the first surface 211 and the display area corresponding to the third surface 221. According to an embodiment, the electronic device 200 may operate in a substantially unfolded state (e.g., the unfolded state of FIG. 2A) and/or a substantially folded state (e.g., the folded state of FIG. 2B) based on a predetermined inflection angle (e.g., the angle between the first housing 210 and the second housing 220 in the intermediate state) through the hinge module 240. For example, in case that a pressing force is provided in the unfolding direction (direction B) in the unfolded state at a predetermined inflection angle through the hinge module 240, the electronic device 200 may be operated to transition to the unfolded state (e.g., the unfolded state of FIG. 2A). For example, the electronic device 200 may be operated through the hinge module 240 to transition to a closed state (e.g., the folded state of FIG. 2B) in case that a pressing force is provided in a folding direction (direction C) in a state in which the electronic device 200 is unfolded at a predetermined inflection angle. In an embodiment, the electronic device 200 may be operated to maintain the unfolded state at various angles through the hinge module 240.

Referring to FIG. 3, an electronic device 200 may include a first side frame 213, a second side frame 223, and a hinge module 240 rotatably connecting the first side frame 213 and the second side frame 223. According to an embodiment, the electronic device 200 may include a first support plate 2131 at least partially extending from the first side frame 213 and a second support plate 2231 at least partially extending from the second side frame 223. According to an embodiment, the first support plate 2131 may be integrally formed with the first side frame 213 or may be structurally coupled with the first side frame 213. Similarly, the second support plate 2231 may be integrally formed with the second side frame 223 or may be structurally coupled with the second side frame 223.

According to an embodiment, the electronic device 200 may include the flexible display 260 disposed to be supported by the first support plate 2131 and the second support plate 2231. According to an embodiment, the electronic device 200 may include a first rear cover 214 coupled to the first side frame 213 and providing a first space between it and the first support plate 2131 and a second rear cover 224 coupled to the second side frame 223 and providing a second space between it and the second support plate 2231. In an embodiment, the first side frame 213 and the first rear cover 214 may be integrally formed. In an embodiment, the second side frame 223 and the second rear cover 224 may be integrally formed. According to an embodiment, the electronic device 200 may include a first housing 210 (e.g., a first housing structure) provided through the first side frame 213, the first support plate 2131, and the first rear cover 214. According to an embodiment, the electronic device 200 may include a second housing 220 (e.g., a second housing structure) provided through the second side frame 223, the second support plate 2231, and the second rear cover 224. According to an embodiment, the electronic device 200 may include a sub display 231 disposed to be visible from the outside through at least a partial area of the first rear cover 214.

According to an embodiment, the electronic device 200 may include a first board assembly 261 (e.g., a main printed circuit board), a camera assembly 263, a first battery 271, or a first bracket 251 disposed in a first space between the first side frame 213 and the first rear cover 214.

According to an embodiment, the camera assembly 263 may include a plurality of camera devices (e.g., the camera devices (e.g., the first camera device 205 and/or the second camera device 208) of FIG. 2A and FIG. 2B), and may be electrically connected to the first board assembly 261.

According to an embodiment, the first bracket 251 may provide a support structure and enhanced rigidity for supporting the first board assembly 261 and/or the camera assembly 263.

According to an embodiment, the electronic device 200 may include a second board assembly 262 (e.g., a sub printed circuit board), an antenna 290 (e.g., a coil member), a second battery 272, or a second bracket 252 disposed in a second space between the second side frame 223 and the second rear cover 224.

According to an embodiment, the electronic device 200 may include a wiring member 280 (e.g., a flexible printed circuit board (FPCB)). The wiring member 280 according to an embodiment may be disposed to extend from the first board assembly 261 across the hinge module 240 to a plurality of electronic components (e.g., the second board assembly 262, the second battery 272, or the antenna 290) disposed between the second side frame 223 and the second rear cover 224.

According to an embodiment, the first board assembly 261, the second board assembly 262, and the wiring member 280 may be electrically connected, operatively connected, or integrally formed with each other. According to an embodiment, as the first board assembly 261 and the second substrate assembly 26 are integrally formed to transmit and receive an electrical signal or wavelength, the wiring member 280 may be omitted.

According to an embodiment, the electronic device 200 may include one or more batteries (e.g., the first battery 271 and/or the second battery 272). For example, one or more batteries may include at least one of the first battery 271 disposed in an area corresponding to the first housing 210 and a second battery 272 disposed in an area corresponding to the second housing 220. The electronic device 200 according to an embodiment may include any one of the first battery 271 and/or the second battery 272, or may include both the first battery 271 and/or the second battery 272.

According to an embodiment, the electronic device 200 may include a flexible battery. The flexible battery may be disposed over at least a portion of each of the first housing 210 and the second housing 220. The flexible battery may be disposed to overlap a portion of an area corresponding to the first housing 210 and a portion of an area corresponding to the second housing 220. The flexible battery may include a battery hinge portion at a boundary at which the first housing 210 and the second housing 220 are separated from each other. The battery hinge portion may be formed to be physically thin. The battery hinge portion is provided at a position corresponding to the folding axis (e.g., the axis F of FIG. 2A to FIG. 2C), so that the flexible battery may be folded as the electronic device 200 is folded.

According to an embodiment, the battery hinge portion of the flexible battery may be a physical or electrical connector. The flexible battery may include a first battery section, a second battery section, and a connector electrically or operatively connecting the first battery section and the second battery section. The first battery section and the second battery section may be electrically or operatively connected to each other through a connector. The connector may be a component constituting the flexible battery and may be provided outside or inside the flexible battery. However, according to an embodiment, the connector may physically connect the first battery section and the second battery section as a non-conductive line connector.

According to an embodiment, the antenna 290 may include a near field communication (NFC) antenna, a wireless charging antenna, and/or a magnetic secure transmission (MST) antenna. For example, the antenna 290 may perform short-range communication with an external device or may wirelessly transmit and receive power required for charging.

According to an embodiment, the electronic device 200 may include a hinge housing 241 (e.g., a hinge cover) that supports the hinge module 240, is exposed to the outside in case that the electronic device 200 is in a folded state (e.g., the folded state of FIG. 2B), and is drawn in a first space and/or a second space not to be visible from the outside in case that the electronic device 200 is in an unfolded state (e.g., the unfolded state of FIG. 2A).

According to an embodiment, the electronic device 200 may include a first protective cover 215 coupled along an edge of the first side frame 213. According to an embodiment, the electronic device 200 may include a second protective cover 225 coupled along an edge of the second side frame 223. According to an embodiment, an edge of the first flat portion (e.g., the first flat portion 260a of FIG. 2A) of the flexible display 260 may be protected by the first protective cover 215. According to an embodiment, an edge of the second flat portion (e.g., the second flat portion 260b of FIG. 2A) of the flexible display 260 may be protected by the second protective cover 225. According to an embodiment, the electronic device 200 may include a protective cap 235 disposed to protect an edge of a bendable portion (e.g., the bendable portion 260c of FIG. 2A) corresponding to the hinge module 240 of the flexible display 260.

The electronic device 200 according to an embodiment may be a bar-type electronic device. The bar-type electronic device may include one or more housings that entirely support a display 260. According to an embodiment, a pair of housings 210, 220 may integrally form a bar-type housing. The bar-type housing may entirely support the display 260.

According to an embodiment, the pair of housings 210, 220 include a first housing 210 and a second housing 220, and the first housing 210 and the second housing 220 may be fixedly coupled to each other. The fixedly coupled pair of housings 210, 220 may be configured not to rotate with respect to a hinge axis (e.g., axis F). The fixedly coupled pair of housings 210, 220 may entirely support the display 260.

According to an embodiment, as the first housing 210 and the second housing 220 form one integral bar-type housing or are fixedly coupled to each other, components such as a hinge module 240 and a hinge housing 241 may be omitted between the first housing 210 and the second housing 220.

According to an embodiment, the bar-type electronic device may not rotate with respect to a folding axis (e.g., F axis) and may maintain a fixed shape corresponding to an initial shape of the housing. Accordingly, even in case that an external force is applied to the electronic device, the electronic device may not be folded, rolled, slid, or twisted.

According to an embodiment, positions of one or more electronic components and/or components received in the housing of the electronic device are not limited to the illustrated form, and positional relationships and/or coupling relationships between the components may be variously changed.

According to an embodiment, corresponding to an unfolded state or folded state of the electronic device 200, the flexible display 260 may be compressed or stretched. Specifically, in case that the electronic device 200 is in a folded state, compressive stress may occur in a third area 260c of the flexible display 260. Further, in case that the electronic device 200 is in an unfolded state, tensile stress may occur in the third area 260c of the flexible display 260. The area where the compressive stress and/or the tensile stress acts is not limited to the third area 260c and may occur in the entire area of the flexible display 260.

According to an embodiment, due to compressive stress and/or tensile stress acting on the flexible display 260, an external force exceeding an elastic limit of the flexible display 260 may occur. In this case, damage such as scratches and creases may occur on an exterior of the flexible display 260. This may lead to quality degradation in performance of the flexible display 260.

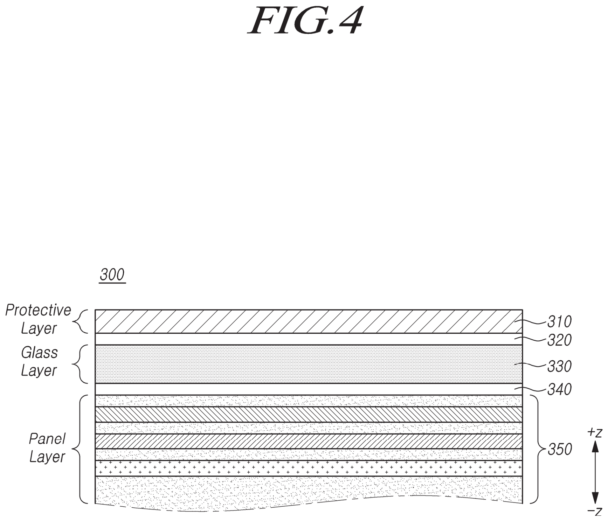

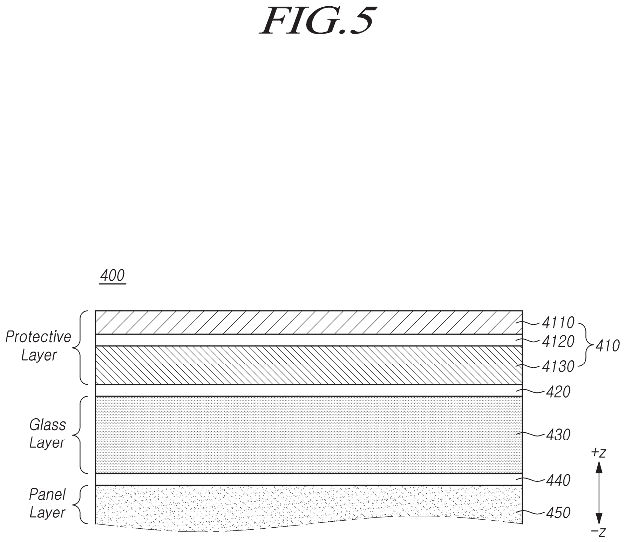

The flexible display 260 to be proposed in the disclosure may include a protective layer (e.g., a protective layer 310 of FIG. 4 or a protective layer 410 of FIG. 5) provided with a material having self-healing characteristics and/or shape memory characteristics (hereinafter referred to as self-healing polymer). The protective layer 310, 410 may be disposed on one surface exposed to the outside of the flexible display 260.

Further, the protective layer 310, 410 to be proposed in the disclosure may be applied to various types of displays (e.g., the display module 160 of FIG. 1).

For example, the protective layer 310, 410 may be applied to a display included in a bar-type electronic device.

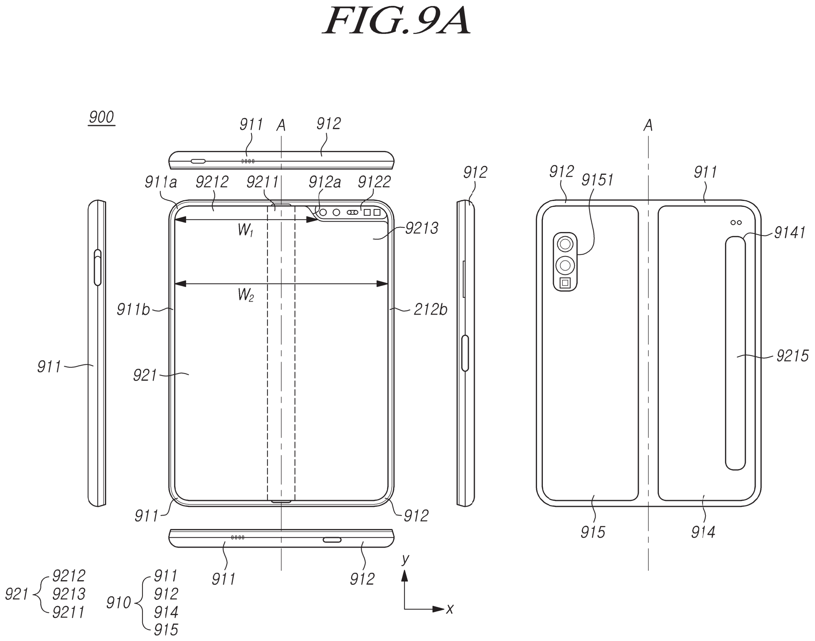

For example, the protective layer 310, 410 may be applied to a flexible display (e.g., flexible display 921 of FIG. 9A to FIG. 9C) included in an electronic device (e.g., electronic device 900 of FIG. 9A to FIG. 9C) having a folding axis provided vertically (y-axis direction).

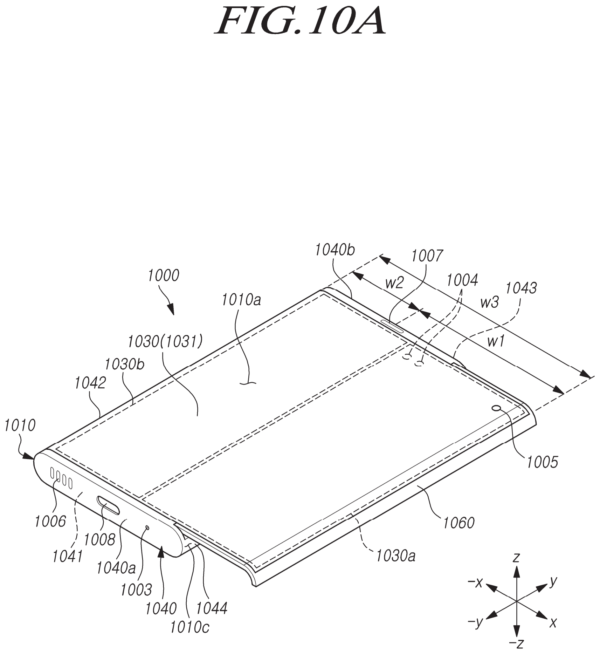

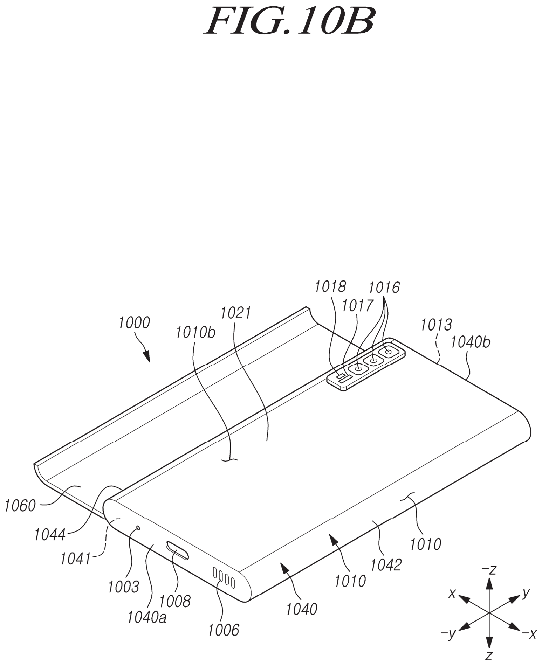

For example, the protective layer 310, 410 may be applied to a flexible display (e.g., flexible display 1030 of FIG. 10A and FIG. 10B) retracted into or extending from a slide structure 1060 of an electronic device (e.g., electronic device 1000 of FIG. 10A and FIG. 10B).

For example, the protective layer 310, 410 may be applied to a flexible display included in an electronic device having a plurality of folding axes.

Further, the protective layer 310, 410 may be applied to various types of flexible displays.

FIG. 4 is a cross-sectional view illustrating a display 300 (e.g., the flexible display 260 of FIG. 2A to FIG. 2C and FIG. FIG. 3), according to an embodiment. Specifically, FIG. 4 is a cross-sectional view illustrating a stacked structure of layers constituting the flexible display 260, and may be understood as focusing on a protective layer exposed to an outer surface of the flexible display 260. The illustrated stacked structure of display 300 may omit some layers or modules constituting the flexible display 260.

Referring to FIG. 4, a display 300 may include a protective layer 310, a glass layer 330, and a panel layer 350.

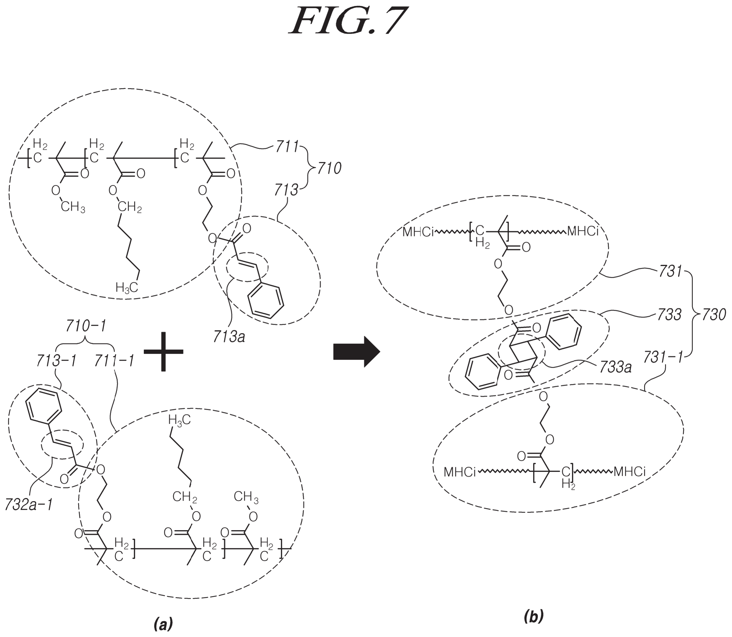

According to an embodiment, the protective layer 310 may be composed of a polymer having self-healing characteristics and/or shape memory characteristics (e.g., final target material 710, 710-1 of FIG. 7). The polymer may be repetitive, reversible, and have self-healing characteristics.

According to an embodiment, the polymer may have predetermined recovery characteristics from plastic deformation. The polymer may have, e.g., substantially 90% or more recoverability based on a plastically deformed PV (peak to valley) value.

According to an embodiment, the polymer may have enhanced shape memory performance under predetermined temperature conditions. The polymer may have, e.g., an increased degree and/or speed of shape recovery in response to applying heat above a predetermined glass transition temperature.

According to an embodiment, the polymer may be an acrylic copolymer. The polymer may have self-healing characteristics through dynamic bonds by hydrogen bonding and dynamic bonds by van der Waals bonding.

According to an embodiment, the polymer may have predetermined optical transparency (e.g., transmittance) and/or predetermined mechanical properties (e.g., rigidity). The polymer may achieve, e.g., substantially 88% or more transmittance compared to a protective layer formed of polyethylene terephthalate (PET). The Young's modulus of the polymer may be, e.g., 1 giga Pascals (GPa) to 2 GPa.

According to an embodiment, the polymer may combine at least one or more materials with an optimal composition ratio to have the mentioned self-healing characteristics, shape memory performance, transmittance, or rigidity.

For example, the polymer may combine methylmethacrylate (hereinafter referred to as MMA), hexylmethacrylate (hereinafter referred to as HMA), and cinnamoyl (hereinafter referred to as Ci) in a predetermined ratio. The predetermined ratio may be, e.g., a molar ratio of MMA:HMA:Ci=37:12:1 to 37.5:25.5:1. As the ratio of MMA included in the polymer increases, self-healing characteristics may decrease due to increased mechanical rigidity and/or glass transition temperature. Therefore, MMA, HMA, and Ci constituting the polymer may satisfy the predetermined ratio to have the self-healing characteristics.

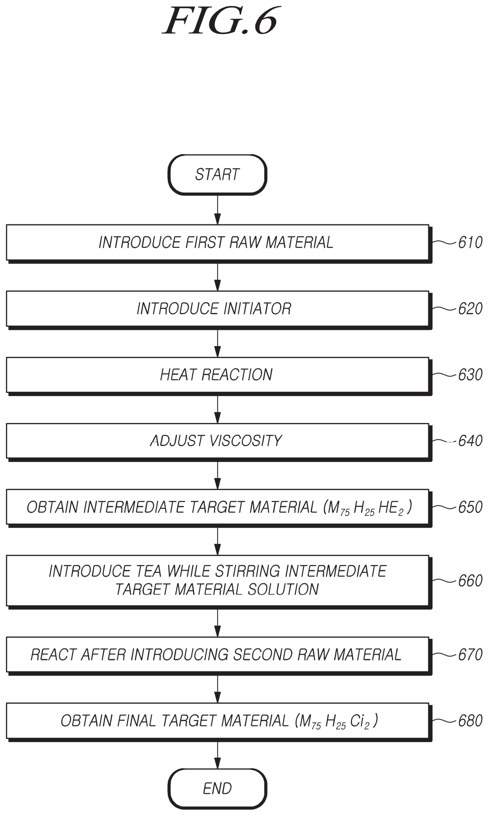

According to an embodiment, the polymer may be synthesized from a precursor material (intermediate target material). The precursor material may be a material combining MMA, HMA, and hydroxyethylmethacrylate (hereinafter referred to as HEMA) in a predetermined ratio. The predetermined ratio may achieve, e.g., MMA:HMA:Ci=37:12:1 to 37.5:12.5:1. Regarding the manufacture of the polymer, it is described below in FIG. 6.

According to an embodiment, the protective layer 310 may have a predetermined thickness. The predetermined thickness may be, e.g., 30 µm to 200 µm. The protective layer 310 may be implemented as a film-type membrane or coating layer.

According to an embodiment, by providing the protective layer 310 formed of the polymer, the display 300 may provide self-healing and/or recovery against damage (e.g., crease and/or crack) occurring in response to folding and/or unfolding.

According to an embodiment, the glass layer 330 may be formed of a material that is at least partially substantially transparent and flexible. For example, the glass layer 330 may be implemented as flexible thin glass (FTG) or ultra-thin glass (UTG). The glass layer 330 may be disposed on the front surface of the display 300. The glass layer 330 may primarily protect the display 300.

According to an embodiment, the glass layer 330 may have various shapes corresponding to characteristics of the display 300. For example, in case that the display 300 is deformed at a predetermined point, the thickness of the glass layer 330 at the predetermined point may be different from each other at points adjacent to the predetermined point. For example, the thickness of the glass layer 330 in a third area (e.g., the third area 260c of FIG. 2A) provided near a folding axis (e.g., the axis F of FIG. 2A to FIG. 2C) may be thinner than the thickness of the glass layer 330 in the first area (e.g., the first area 260a of FIG. 2A) or the second area (e.g., the second area 260b of FIG. 2A).

According to an embodiment, a first adhesive member 320 may be provided to attach the protective layer 310 to one surface of the glass layer 330. A second adhesive member 340 may be provided to attach the other surface of the glass layer 330 to one surface of the panel layer 350. For example, the first adhesive member 320 and the second adhesive member 340 may be implemented as a layer having a predetermined thickness.

According to an embodiment, the first adhesive member 320 and the second adhesive member 340 may be implemented as optically clear adhesive (OCA) or optically clear resin (OCR). The first adhesive member 320 and the second adhesive member 340 may be formed of acrylic-based, silicone-based, or urethane-based components.

According to an embodiment, the panel layer 350 may be implemented as a display panel. For example, the panel layer 350 may have a substrate, a light emitting layer, a polarizing layer, a liquid crystal layer, a color filter, and a thin film transistor (TFT) stacked in a height direction (e.g., z-axis direction).

FIG. 5 is a cross-sectional view illustrating a display 400 (e.g., the display 300 of FIG. 4) according to an embodiment. The display 400 illustrated in FIG. 5 may at least partially correspond to the display 300 illustrated in FIG. 4. Therefore, overlapping descriptions are omitted and differences are mainly described.

Referring to FIG. 5, a display 400 may include a protective layer 410 (e.g., the protective layer 310 of FIG. 4), a glass layer 430 (e.g., the glass layer 330 of FIG. 4), and a panel layer 450 (e.g., the panel layer 350 of FIG. 4).

According to an embodiment, the protective layer 410 may include a first layer 4110 and a second layer 4130. The first layer 4110 may be composed of a polymer having self-healing characteristics and/or shape memory characteristics. The second layer 4130 may be composed of PET material. The polymer may be formed by combining MMA, HMA, and Ci in a predetermined ratio. The predetermined ratio may be, e.g., a molar ratio of MMA:HMA:Ci=37:12:1 to MMA:HMA:Ci=37.5:12.5:1.

According to an embodiment, the protective layer 410 may be formed by laminating the first layer 4110 on one surface of the second layer 4130. For example, the first layer 4110 may be attached in film form to one surface of the second layer 4130, or may be formed by thin film coating a polymer on one surface of the second layer 4130.

According to an embodiment, the first layer 4110 may have a predetermined thickness. The predetermined thickness may be, e.g., 1 µm to 50 µm.

According to an embodiment, an adhesive member 4120 may be used to laminate the first layer 4110 on one surface of the second layer 4130. The adhesive member 4120 may be implemented as OCA or OCR. The adhesive member 4120 may be omitted as the first layer 4110 and the second layer 4130 are implemented integrally. For example, in case that the protective layer 410 is formed by applying a material constituting the first layer 4110 onto the upper side of the second layer 4130, the adhesive member 4120 may be omitted.

According to an embodiment, by configuring the protective layer 410 with the first layer 4110 and the second layer 4130, optical transmittance may be increased by a predetermined level compared to the protective layer 310 of FIG. 4. The protective layer 410 may have a structure in which three or more layers are stacked.

FIG. 6 is a flowchart for manufacturing a self-healing polymer (e.g., the self-healing polymer 710, 710-1 of FIG. 7) to be used as a protective layer of a display, according to an embodiment.

Referring to FIG. 6, it illustrates a flowchart for manufacturing a self-healing polymer according to steps, where some steps may be omitted or repeated as necessary, and the order may be changed. Further, unless otherwise designated, manufacturing conditions may be understood as room temperature or atmospheric pressure.

According to an embodiment, steps 610 to 650 may be understood as steps for obtaining an intermediate target material (MₓH_{y}HE_{z}), and steps 660 to 680 may be understood as steps for obtaining a final target material (MₓH_{y}Ci_{z}) from the intermediate target material (MₓH_{y}HE_{z}).

According to an embodiment, in step 610, a first raw material may be introduced into a flask. The first raw material may include, e.g., MMA, HMA, and HE. The amount of the first raw material introduced into the flask may be predetermined.

For example, MMA, HMA, and HE included in the first raw material introduced into the flask may have a predetermined composition ratio. The flask may be a three-neck flask having a predetermined internal volume. The predetermined composition ratio may be understood as a molar ratio. The predetermined composition ratio may be, e.g., MMA 74.08 grams (74 mol%), HMA 40.86 grams (24 mol%), and HE 2.6 grams (2 mol%).

According to an embodiment, the first raw material introduced into the flask may be maintained in a stirred state. Dissolved oxygen may be removed from the first raw material being maintained in a stirred state in the flask. For example, after sealing the flask, an inert gas (e.g., nitrogen (N₂) gas) may be supplied to a solution mixed with the first raw material for a predetermined time (e.g., 15 minutes).

According to an embodiment, in step 620, an initiator may be introduced into the flask including the first raw material. The initiator may be understood as a solution including azobisisobutyronitrile (hereinafter referred to as AIBN). The initiator may initiate a free radical polymerization process.

For example, a solution that may be understood as an initiator may be prepared by dissolving a predetermined volume (e.g., 20 ml) of AIBN at a predetermined concentration (e.g., 0.1 weight percent) in a predetermined volume (e.g., 5 ml) of solvent. The solvent may be, e.g., any one of chloroform, tetrahydrofuran (hereinafter referred to as THF), or toluene.

According to an embodiment, dissolved oxygen present in the mixed solution may be removed by introducing the initiator into the flask and using an inert gas.

According to an embodiment, in step 630, the sealed flask including the reaction solution mixed with the first raw material and initiator may be heated to a predetermined temperature to react the first raw material included in the reaction solution for a predetermined time. The predetermined temperature may be, e.g., 75°C. The predetermined time may be, e.g., 3 hours to 4 hours. A material reacted for the predetermined time may be referred to as a reactant.

According to an embodiment, in step 640, the viscosity of the reactant may be adjusted. To adjust the viscosity of the reactant, a solvent may be additionally introduced into the flask including the reactant.

According to an embodiment, cooled methanol may be dropped into the flask by a predetermined volume to precipitate the intermediate target material (MₓH_{y}HE_{z}) included in the reactant included in the flask. Here, M may be understood as MMA, H as HMA, and numbers denoted as subscripts may be understood as composition ratios of each material. The x may be 74 to 75. The y may be 24 to 25. The z may be 2.

According to an embodiment, in step 650, an intermediate target material (MₓH_{y}HE_{z}) may be obtained. The product obtained by filtering the precipitated intermediate target material (MₓH_{y}HE_{z}) may be dried under decreased pressure at room temperature to obtain the intermediate target material (MₓH_{y}HE_{z}).

According to an embodiment, in step 660, triethylamine (hereinafter referred to as TEA) may be introduced into the flask where the intermediate target material (MₓH_{y}HE_{z}) is being stirred. For example, TEA may be introduced while stirring a solution in which the intermediate target material (MₓH_{y}HE_{z}) is dissolved by THF solvent in the flask at room temperature (e.g., about 25°C) or low temperature (e.g., about 0°C).

According to an embodiment, in step 670, a second raw material may be introduced to react with the solution included in the flask. The second raw material may be generated by maintaining a solution dissolving Ci at a predetermined concentration (e.g., 10 mol%) using 50 ml of THF as a solvent at a predetermined temperature (e.g., -2°C to 0°C). The second raw material including Ci may be referred to as a Ci solution.

According to an embodiment, corresponding to dropping the Ci solution into the flask, TEA-Cl salt may be generated.

According to an embodiment, after introducing the Ci solution into the flask including the intermediate target material (MₓH_{y}HE_{z}) and stirring for 3 hours to 4 hours at room temperature or low temperature, the intermediate target material (MₓH_{y}HE_{z}) and Ci solution may be reacted.

According to an embodiment, in step 680, a final target material (MₓH_{y}Ci_{z}) may be obtained as a result of the reaction between the intermediate target material (MₓH_{y}HE_{z}) and the Ci solution.

According to an embodiment, TEA-Cl salt generated from the reactant of the intermediate target material (MₓH_{y}HE_{z}) and Ci solution may be removed by vacuum filtration.

According to an embodiment, the viscosity of the vacuum-filtered solution may be adjusted. For example, a rotary evaporator may remove at least a portion of the THF solvent.

According to an embodiment, the final target material (MₓH_{y}Ci_{z}) may be precipitated by reacting with methanol dropped into the viscosity-adjusted solution. The final target material (MₓH_{y}Ci_{z}) may be obtained by filtering the precipitate and drying under decreased pressure at room temperature. For example, in case that the precipitate undergoes yellowing due to Ci, the final target material (MₓH_{y}Ci_{z}) may be obtained by dissolving in a solvent such as chloroform or THF and repeating washing and/or precipitation.

According to an embodiment, M, H, or Ci included in the final target material (MₓH_{y}Ci_{z}) may be understood as MMA, HMA, or cinnamoyl (Ci), respectively, and numbers denoted as subscripts may be understood as composition ratios of each constituent material. The x may be 74 to 75. The y may be 24 to 25. The z may be 2.

FIG. 7 illustrates a bonding structure of a self-healing polymer 710, 710-1, 730, according to an embodiment. (a) illustrates a bonding structure of the polymer 710, 710-1 before cross-linking, and (b) may be understood as illustrating a bonding structure of the polymer 730 after cross-linking. The polymer before cross-linking in (a) is referred to as "first polymer 710" and "second polymer 710-1", respectively, and the cross-linked polymer in (b) is referred to as "cross-linked polymer 730".

Referring to FIG. 7, a first polymer 710 and a second polymer 710-1 may each be represented by a molecular formula of MₓH_{y}Ci_{z}. In other words, the first polymer 710 and the second polymer 710-1 may be understood as a copolymer synthesized from a plurality of monomers. Here, M may be understood as MMA, H as HMA, Ci as cinnamoyl, and x, y, z may be understood as composition ratios. The x may be 74 to 75. The y may be 24 to 25. The z may be 2.

According to an embodiment, the first polymer 710 and the second polymer 710-1 may be implemented as amorphous polymers. By implementing the first polymer 710 and the second polymer 710-1 as amorphous polymers, a high level of optical transparency may be provided. The first polymer 710 and the second polymer 710-1 may provide about 88% transmittance compared to PET.

According to an embodiment, the first polymer 710 and the second polymer 710-1 may form hydrogen bonds. An oxygen atom (O) included in the first polymer 710 and the second polymer 710-1 may form a hydrogen bond with hydrogen, thereby forming relatively strong dynamic bonds.

According to an embodiment, the first polymer 710 and the second polymer 710-1 may form relatively weak dynamic bonds by forming van der Waals bonds. A photo-bonding derivative may be formed by bonding between cinnamoyl groups (Ci) included in the first polymer 710 and the second polymer 710-1. For the first polymer 710 and the second polymer 710-1 to form a photo-bonding derivative, electromagnetic waves (e.g., ultraviolet rays) having a predetermined energy level may be radiated. Due to the photo-bonding derivative, the self-healing polymer may have shape memory characteristics.

According to an embodiment, in (b), the first polymer 710 and the second polymer 710-1 may form a cross-linked polymer 730. A first cinnamoyl group 713 included in the first polymer 710 and a second cinnamoyl group 713-1 included in the second polymer 710-1 may cross-link to form the cross-linked polymer 730. Specifically, a double bond 713a included in the first cinnamoyl group 713 and a double bond 713a-1 included in the second cinnamoyl group 713-1 may form a cross-link.

According to an embodiment, the cross-linked polymer 730 may have self-healing characteristics and/or shape memory characteristics. Optimal rigidity and self-healing characteristics may be provided by the composition ratio of MMA and HMA included in the cross-linked polymer 730, and shape memory characteristics may be provided by Ci included in the cross-linked polymer.

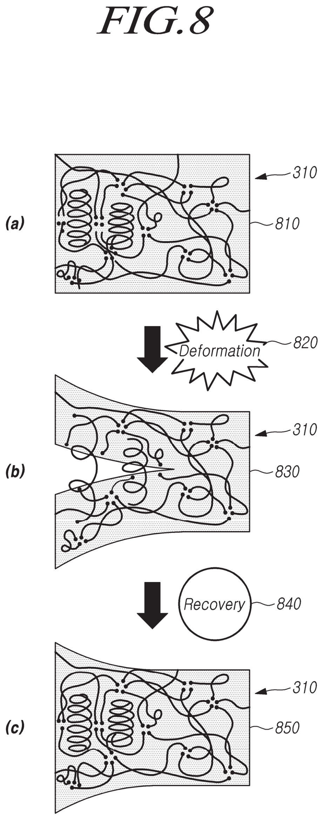

FIG. 8 illustrates deformation 820 of a protective layer (e.g., the protective layer 310 of FIG. 3 or the protective layer 410 of FIG. 4) manufactured with a self-healing polymer (e.g., the self-healing polymer 710, 710-1 of FIG. 7) and the corresponding recovery 840 process, according to an embodiment.

Referring to FIG. 8, a process in which a protective layer 310 manufactured with a self-healing polymer is deformed 820 by compressive or tensile stress and recovered 840 is illustrated. A state of the protective layer 310 in (a) is referred to as a first state 810, a state of the protective layer 310 in (b) as a second state 820, or a state of the protective layer 310 in (c) as a third state. The second state may be a state in which the protective layer 310 of the first state 810 is changed by deformation 820. The third state may be a state in which the protective layer of the second state 830 is changed by recovery 840.

According to an embodiment, the protective layer 310 in the first state 810 may undergo deformation 820 during a process of repeatedly folding and unfolding a display (e.g., the flexible display 260 of FIG. 2). This may cause a problem of decreased transparency or damaged appearance of the display 260.

According to an embodiment, the protective layer 310 in the second state 830 may have a property of returning to a state corresponding to the first state 810 due to self-healing characteristics and shape memory characteristics of the self-healing polymer. Therefore, the protective layer 310 in the second state 830 may be recovered 840 to the third state 850 corresponding to the first state 810.

According to an embodiment, the third state 850 may provide a restoration effect of 90% or more compared to the first state 810.

According to an embodiment, the protective layer 310 may provide higher and faster recovery characteristics under predetermined temperature conditions. For example, the protective layer 310 may have shortened characteristics of recovering to before deformation and/or time required for recovery under high temperature conditions (e.g., above 75°C) compared to room temperature.

According to an embodiment, recovery characteristics of the protective layer 310 manufactured with a self-healing polymer may be identified through experimental examples. Table 1 below illustrates recovery characteristics according to materials constituting the protective layer 310.

**Table 1**

| Material | Recovery rate after damage (%) |
|---|---|
| PET(a) | 2.2 |
| PU(b) | - (broken) |
| M₇₅H₂₅HE₂(c) | 71 |
| M₇₅H₂₅Ci₂ #1(d) | 88.2 |
| M₇₅H₂₅Ci₂ #2(e) | 90.9 |

Referring to Table 1, it illustrates the degree of recovery after damage of protective layers 310 composed of PET(a), PU(b), M₇₅H₂₅HE₂(c), M₇₅H₂₅Ci₂ #1(d), and M₇₅H₂₅Ci₂ #2(e), respectively. Here, M₇₅H₂₅Ci₂ #1(d) and M₇₅H₂₅Ci₂ #2(e) may be understood as M₇₅H₂₅Ci₂ #1(d) without photo-crosslinking and M₇₅H₂₅Ci₂ #2(e) with photo-crosslinking, according to whether photo-crosslinking was formed by ultraviolet irradiation.

According to an embodiment, the damage to the protective layer 310 illustrates a recovery rate through a physical recovery process at a temperature of 75°C after inflicting 10 µm thick damage through a blazer on the protective layer 310 having a predetermined thickness and predetermined area (3 cm x 3 cm). Here, the physical recovery process may be understood as rubbing the protective layer 310 to enhance intermolecular bonding fluidity to promote self-healing characteristics.

According to an embodiment, it may be identified that PET(a) illustrates a recovery rate of 2.2%, and PU(b) is permanently damaged without recovery after damage. It may be identified that M₇₅H₂₅HE₂(c) illustrates a recovery rate of 75%.

According to an embodiment, it may be identified that M₇₅H₂₅Ci₂ #1(d) and M₇₅H₂₅Ci₂ #2(e) show recovery rates of 88.2% and 90.9% according to whether photo-crosslinking occurred. Therefore, higher recovery characteristics may be provided according to whether cross-linking of cinnamoyl groups occurs.

FIG. 9A is a view illustrating an unfolded state of an electronic device 900 (e.g., the electronic device 101 of FIG. 1), according to an embodiment.

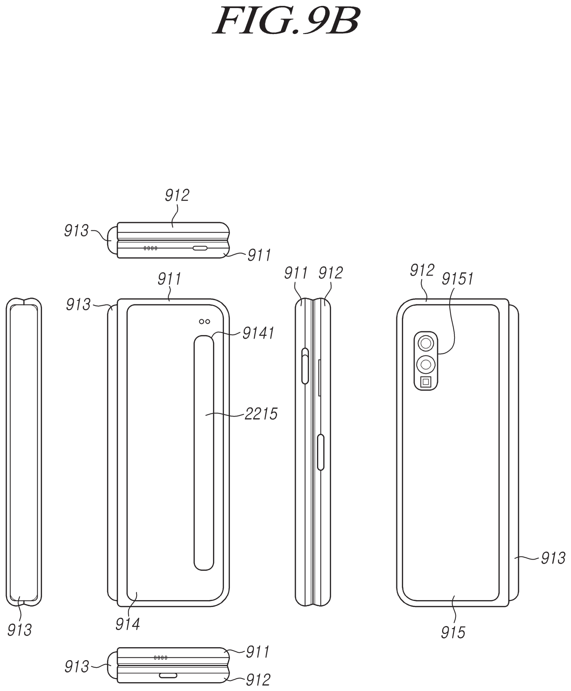

FIG. 9B is a view illustrating a folded state of the an electronic device 900, according to an embodiment.

Referring to FIG. 9A and FIG. 9B, in an embodiment, an electronic device 900 may include a foldable housing 910, a hinge cover 913 covering a foldable portion of the foldable housing 910, and a flexible or foldable display 921 disposed within a space formed by the foldable housing 910. In the disclosure, a surface where the display 921 is disposed is defined as a first surface or a front surface of the electronic device 900. The opposite surface of the front surface is defined as a second surface or a back surface of the electronic device 900. The surface surrounding the space between the front and back surfaces is defined as a third surface or a side surface of the electronic device 900.

According to an embodiment, the foldable housing 910 may include a first housing structure 911, a second housing structure 912 including a sensor area 9122, a first rear cover 914, and a second rear cover 915. The foldable housing 910 of the electronic device 900 are not limited to the shape and coupling shown in FIG. 9A and FIG. 9B but may rather be implemented in other shapes or via a combination and/or coupling of other components. For example, in another embodiment, the first housing structure 911 and the first rear cover 914 may be integrally formed with each other, and the second housing structure 912 and the second rear cover 915 may be integrally formed with each other.

In an embodiment, the first housing structure 911 and the second housing structure 912 may be positioned on opposite sides of a folding axis (axis A), and they may be overall symmetrical in shape with each other with respect to the folding axis A. As set forth below, the first housing structure 911 and the second housing structure 912 may have different angles or distances formed therebetween depending on whether the electronic device 900 is in an unfolded, folded, or intermediate state. In an embodiment, the first housing structure 911 and the second housing structure 912 may be symmetrical in shape except that the second housing structure 520 further includes the sensor area 9122 where various sensors are arranged, unlike the first housing structure 510. In another embodiment, the sensor area 9122 may additionally be disposed in, or replaced by, at least a partial area of the first housing structure 911 or the second housing structure 912.

In an embodiment, the electronic device 900 may operate in an in-folding manner and/or an out-folding manner by rotating the first housing structure 911 with respect to the second housing structure 912 in a range of 0 degrees to 360 degrees through a hinge structure (not illustrated). According to various embodiments, the hinge structure may be formed in a vertical direction or a horizontal direction in case that the electronic device 900 is viewed from above. According to various embodiments, there may be a plurality of hinge structures. For example, the plurality of hinge structures may all be arranged in the same direction. As another example, some hinge structures among the plurality of hinge structures may be arranged and folded in different directions.

According to an embodiment, as shown in FIG. 9A, the first housing structure 911 and the second housing structure 912 together may form a recess to receive the display 921. In an embodiment, due to the sensor area 9122, the recess may have two or more different widths in the direction perpendicular to the folding axis A.

For example, the recess may have (a) a first width W1 between a first portion 911a parallel to the folding axis A of the first housing structure 911 and a first portion 912a formed at an edge of the sensor area 9122 of the second housing structure 912 and (b) a second width w2 formed by a second portion 911b of the first housing structure 911 and a second portion 912b parallel to the folding axis A and not corresponding to the sensor area 9122 of the second housing structure 912. In this case, the second width w2 may be longer than the first width w1. In other words, the first portion 911a of the first housing structure 911 and the first portion 912a of the second housing structure 912, asymmetric in shape with each other, may form the first width w1 of the recess, and the second portion 912b of the first housing structure 911 and the second portion 912b of the second housing structure 912, symmetric in shape with each other, may form the second width w2 of the recess. In an embodiment, the first portion 912a and second portion 912b of the second housing structure 912 may differ in distance from the folding axis A. The width of the recess is not limited thereto. According to various embodiments, the recess may have a plurality of widths due to the shape of the sensor area 9122 or the asymmetric portions of the first housing structure 911 and the second housing structure 912.

In an embodiment, the first housing structure 911 and the second housing structure 912 may at least partially be formed of a metal or non-metallic material with a rigidity selected to support the display 921.

In an embodiment, the sensor area 9122 may be formed adjacent to a corner of the second housing structure 912 and to have a predetermined area. However, the placement, shape, or size of the sensor area 9122 is not limited to those illustrated. For example, in another embodiment, the sensor area 9122 may be provided in a different corner of the second housing structure 912 or in any area between the top corner and the bottom corner. In an embodiment, components for performing various functions, embedded in the electronic device 900, may be exposed through the sensor area 9122 or one or more openings in the sensor area 9122 to the front surface of the electronic device 900. In various embodiments, the components may include various kinds of sensors. The sensors may include at least one of, e.g., a proximity sensor, an illuminance sensor, an iris recognition sensor, an ultrasonic sensor, and an indicator.

In an embodiment, the first rear cover 914 may be disposed on one side of the folding axis on the back surface of the electronic device and have a substantially rectangular periphery which may be surrounded by the first housing structure 911. Similarly, the second rear cover 915 may be disposed on the opposite side of the folding axis on the back surface of the electronic device and its periphery may be surrounded by the second housing structure 912.

In an embodiment, the first rear cover 914 and the second rear cover 915 may be substantially symmetrical in shape with respect to the folding axis (axis A). However, the first rear cover 914 and the second rear cover 915 are not necessarily symmetrical in shape. In another embodiment, the electronic device 900 may include the first rear cover 914 and the second rear cover 915 in various shapes. In another embodiment, the first rear cover 914 may be integrally formed with the first housing structure 911, and the second rear cover 915 may be integrally formed with the second housing structure 912.

In an embodiment, a combined structure of the first rear cover 914, the second rear cover 915, the first housing structure 911, and the second housing structure 912 may form a space where various components (e.g., a printed circuit board or battery) of the electronic device 900 may be disposed. According to an embodiment, one or more components may be arranged or visually exposed on/through the rear surface of the electronic device 900. For example, at least a portion of a sub display 9215 may be visually exposed through a first back surface area 9141 of the first rear cover 914. In another embodiment, one or more components or sensors may be visually exposed through a second back surface area 9151 of the second rear cover 915. According to various embodiments, the sensor may include a proximity sensor and/or a rear-facing camera.

Referring to FIG. 9B, a hinge cover 913 may be disposed between the first housing structure 911 and the second housing structure 912 to hide the internal components (e.g., the hinge structure). According to an embodiment, the hinge cover 913 may be hidden by a portion of the first housing structure 911 and second housing structure 912 or be exposed to the outside depending on the state (e.g., the unfolded state or folded state) of the electronic device 900.

For example, as shown in FIG. 9A, in the unfolded state of the electronic device 900, the hinge cover 913 may be hidden, and thus not exposed, by the first housing structure 911 and the second housing structure 912. By way of example, as shown in FIG. 9B, in the folded state (e.g., the fully folded state) of the electronic device 900, the hinge cover 913 may be exposed to the outside between the first housing structure 911 and the second housing structure 912. As an example, in an intermediate state in which the first housing structure 911 and the second housing structure 912 are folded with a certain angle, the hinge cover 913 may be partially exposed to the outside between the first housing structure 911 and the second housing structure 912. However, in this case, the exposed area may be smaller than that in the completely folded state. In an embodiment, the hinge cover 913 may include a curved surface.

The display 921 may be disposed on a space formed by the foldable housing 910. For example, the display 921 may be seated on a recess formed by the foldable housing 910 and may occupy most of the front surface of the electronic device 900.

Thus, the front surface of the electronic device 900 may include the display 921 and a partial area of the first housing structure 911 and a partial area of the second housing structure 912, which are adjacent to the display 921. The back surface of the electronic device 900 may include the first rear cover 914, a partial area of the first housing structure 911, which is adjacent to the first rear cover 914, the second rear cover 915, and a partial area of the second housing structure 912, which is adjacent to the second rear cover 915.

The display 921 may mean a display at least a portion of which may be transformed to be flat or curved. According to an embodiment, the display 921 may include a folding area 9211, a first area 9212 disposed on one side of the folding area 9211 (e.g., the left side of the folding area 9211 of FIG. 9A), and a second area 9213 disposed on the opposite side of the folding area 9211 (e.g., the right side of the folding area 9211 of FIG. 9A).

The segmentation of the display 921 as shown in FIG. 9A is merely an example, and the display 921 may be divided into a plurality of (e.g., four or more, or two) areas depending on the structure or function of the display 200. For example, in the embodiment illustrated in FIG. 9A, the display 921 may be divided into the areas by the folding area 9211 or folding axis (axis A) extending in parallel with the y axis, or the display 921 may be divided into the areas with respect to another folding area (e.g., a folding area parallel with the x axis) or another folding axis (e.g., a folding axis parallel with the x axis).

The first area 9212 and the second area 9213 may be overall symmetrical in shape with respect to the folding area 9211. However, unlike the first area 9212, the second area 9213 may include a notch depending on the presence of the sensor area 9122, but the rest may be symmetrical in shape with the first area 9212. In other words, the first area 9212 and the second area 9213 may include symmetrical portions and asymmetrical portions.

Described below are the operation of the first housing structure 911 and the second housing structure 912 and each area of the display 921 depending on the state (e.g., the unfolded state (flat state) and folded state) of the electronic device 900.

According to an embodiment, in case that the electronic device 900 is in the unfolded state (flat state) (e.g., FIG. 9A), the first housing structure 911 and the second housing structure 912 may be angled at 180 degrees therebetween, facing in the same direction. The surface of the first area 9212 and the surface of the second area 9213 of the display 921 may be angled at 180 degrees therebetween while facing in the same direction (e.g., forward of the front surface of the electronic device). The folding area 9211 may be coplanar with the first area 9212 and the second area 9213.

According to an embodiment, in case that the electronic device 900 is in the folded state (e.g., FIG. 9B), the first housing structure 911 and the second housing structure 912 may be disposed to face each other. The surface of the first area 9212 and the surface of the second area 9213 of the display 921 may be angled at a small angle (e.g., ranging from 0 degrees to 10 degrees) therebetween while facing each other. At least a portion of the folding area 9211 may be formed as a curve having a predetermined curvature.

According to an embodiment, in case that the electronic device 900 is in the intermediate state (folded state) (e.g., FIG. 9B), the first housing structure 911 and the second housing structure 912 may be disposed at a certain angle therebetween. The surface of the first area 9212 of the display 921 and the surface of the second area 9213 may form an angle which is larger than the angle in the folded state and smaller than the angle in the unfolded state. The folding area 9211 may at least partially have a curved surface with a predetermined curvature and, in this case, the curvature may be smaller than that in case that it is in the folded state.

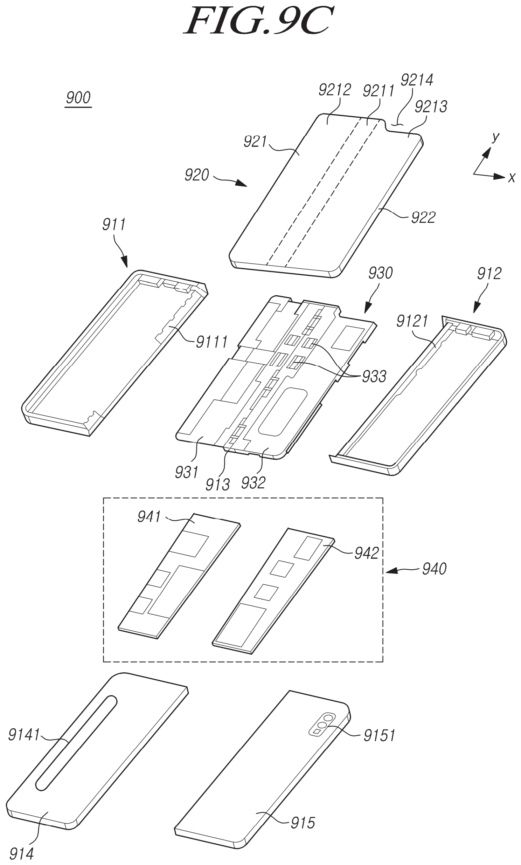

FIG. 9C is an exploded perspective view illustrating an electronic device according to an embodiment.

Referring to FIG. 9C, according to an embodiment, an electronic device 900 may include a display unit 920, a bracket assembly 930, a circuit board unit 940, a first housing structure 911, a second housing structure 912, a first rear cover 914, and a second rear cover 915. In the disclosure, the display unit 920 may be referred to as a display module or display assembly.

The display unit 920 may include a display 921 and one or more plates or layers 922 on which the display 921 is seated. According to an embodiment, the plate 922 may be disposed between the display 921 and the bracket assembly 930. The display 921 may be disposed on at least a portion of one surface (e.g., an upper surface of FIG. 9C) of the plate 922. The plate 922 may be formed in a shape corresponding to the display 921. For example, a portion of the plate 922 may be formed in a shape corresponding to a notch 9214 of the display 921.

The bracket assembly 930 may include a first bracket 931, a second bracket 932, a hinge structure (not shown) disposed between the first bracket 931 and the second bracket 932, a hinge cover 913 covering the hinge structure in case that the hinge structure is viewed from the outside, and a wiring member 933 (e.g., a flexible printed circuit board (FPC)) crossing the first bracket 931 and the second bracket 932.

In an embodiment, the bracket assembly 930 may be disposed between the plate 922 and the circuit board unit 940. As an example, the first bracket 931 may be disposed between the first area 9212 of the display 921 and a first circuit board 941. The second bracket 932 may be disposed between the second area 9213 of the display 921 and a second circuit board 942.

According to an embodiment, the wiring member 933 and the hinge structure may be at least partially disposed inside the bracket assembly 930. The wiring member 933 may be disposed in a direction (e.g., the x-axis direction) crossing the first bracket 931 and the second bracket 932. The wiring member 933 may be disposed in a direction (e.g., the x-axis direction) perpendicular to the folding axis (e.g., the folding axis A of FIG. 9A or the y axis) of the folding area 9211 of the electronic device 900.

As mentioned above, the circuit board unit 940 may include the first circuit board 941 disposed on the first bracket 931 and the second circuit board 942 disposed on the second bracket 932. The first circuit board 941 and the second circuit board 942 may be disposed inside a space formed by the bracket assembly 930, the first housing structure 911, the second housing structure 912, the first rear cover 914, and the second rear cover 915. Components for implementing various functions of the electronic device 900 may be mounted on the first circuit board 941 and the second circuit board 942.

The first housing structure 911 and the second housing structure 912 may be assembled together to be coupled to both sides of the bracket assembly 930, with the display unit 920 coupled to the bracket assembly 930. As described below, the first housing structure 911 and the second housing structure 912 may slide from both sides of the bracket assembly 930 and fit with the bracket assembly 930.

According to an embodiment, the first housing structure 911 may include a first rotation supporting surface 9111, and the second housing structure 912 may include a second rotation supporting surface 9121 corresponding to the first rotation supporting surface 9111. The first rotation supporting surface 9111 and the second rotation supporting surface 9121 may include a curved surface corresponding to a curved surface included in the hinge cover 913.

According to an embodiment, the first rotation supporting surface 9111 and the second rotation supporting surface 9121, in the unfolded state of the electronic device 900 (e.g., the electronic device of FIG. 9A), may cover the hinge cover 913, allowing the hinge cover 913 to be not or minimally exposed to the back surface of the electronic device 900. The first rotation supporting surface 9111 and the second rotation supporting surface 9121, in the folded state of the electronic device 900 (e.g., the electronic device of FIG. 9B), may rotate along the curved surface included in the hinge cover 913, allowing the hinge cover 913 to be maximally exposed to the back surface of the electronic device 900.

According to an embodiment, the electronic device 900 may have the flexible display 920 folded or unfolded by the hinge cover 913. Accordingly, damage may occur in a folding area 9211 due to tensile stress and compressive stress. Therefore, the flexible display 920 may include a protective layer (e.g., the protective layer 310 of FIG. 4 or the protective layer 410 of FIG. 5) on one surface exposed to the outside.

According to an embodiment, by including the protective layer 310, 410 in the flexible display 920, recovery characteristics may be provided through reversible self-healing and/or shape memory in response to damage such as wrinkles or scratches caused by deformation.

FIG. 10A is a view illustrating an extended state of an electronic device, according to an embodiment.

FIG. 10B is a view illustrating a retracted state of an electronic device, according to an embodiment.

Referring to FIG. 10A and FIG. 10B, an electronic device 1000 may include a housing 1010 (e.g., first housing or base housing) and a slide structure 1060 (e.g., second housing or slide housing) at least partially movably coupled from the housing 1010 and supporting at least a portion of a flexible display 1030.

According to an embodiment, the slide structure 1060 may include a bendable member (not illustrated) (e.g., multi-joint hinge or multi-bar assembly) coupled at one end and supporting at least a portion of the flexible display 1030. In case that the slide structure 1060 performs a sliding operation in the housing 1010, the bendable member may be at least partially retracted into an inner space of the housing 1010 while supporting the flexible display 1030.

According to an embodiment, the electronic device 1000 may include a side member 1040 including a front surface 1010a facing a first direction (e.g., +z-axis direction), a rear surface 1010b facing a second direction (e.g., -z-axis direction) opposite to the first direction, and a side surface 1010c surrounding a space between the front surface 1010a and the rear surface 1010b and at least partially exposed to the outside.

According to an embodiment, the rear surface 1010b may be formed through a rear cover 1021 coupled to the housing 1010. According to an embodiment, the rear cover 1021 may be formed by polymer, coated or colored glass, ceramic, metal (e.g., aluminum, stainless steel, or magnesium), or a combination of at least two of the materials. In an embodiment, the rear cover 1021 may be integrally formed with the housing 1010.

According to an embodiment, at least a portion of the side surface 1010c may be disposed to be exposed to the outside through the housing 1010.

According to an embodiment, the side member 1040 may include a first side surface 1041 having a first length, a second side surface 1042 extending from the first side surface 1041 in a perpendicular direction to have a second length longer than the first length, a third side surface 1043 extending from the second side surface 1042 parallel to the first side surface 1041 and having the first length, and a fourth side surface 1044 extending from the third side surface 1043 parallel to the second side surface 1042 and having the second length.

According to an embodiment, the slide structure 1060 may support the flexible display 1030 and extend a display area of the flexible display 1030 by sliding out from the second side surface 1042 toward the fourth side surface 1044 (e.g., +x-axis direction), or reduce the display area of the flexible display 1030 by sliding in from the fourth side surface 1044 toward the second side surface 1042 (e.g., -x-axis direction).

According to an embodiment, the electronic device 1000 may include a first side cover 1040a and a second side cover 1040b for covering the first side surface 1041 and the third side surface 1043.

According to an embodiment, the first side surface 1041 and the third side surface 1043 may be disposed not to be exposed to the outside through the first side cover 1040a and the second side cover 1040b.

According to an embodiment, the electronic device 1000 may include a flexible display 1030 disposed to receive support from the slide structure 1060.

According to an embodiment, the flexible display 1030 may include a first portion 1030a (e.g., flat portion) supported by the slide structure 1060 and a second portion 1030b (e.g., bending portion or bendable portion) extending from the first portion 1030a and at least partially supported through the bendable member.

According to an embodiment, at least a portion of the second portion 1030b may be retracted into the inner space of the housing 1010 and disposed not to be exposed to the outside in a retracted state of the electronic device 1000 (e.g., a state in which at least a portion of the slide structure 1060 is retracted into the housing 1010). Further, at least a portion of the second portion 1030b may be at least partially exposed to the outside to extend from the first portion 1030a while receiving support from at least a portion of the bendable member in an extended state of the electronic device 1000 (e.g., a state in which at least a portion of the slide structure 1060 is extending from the housing 1010). Therefore, the electronic device 1000 may include a rollable type or slidable type electronic device in which a display area of the flexible display 1030 changes according to movement of the slide structure 1060 from the housing 1010.

According to an embodiment, the slide structure 1060 may be movably coupled in a sliding manner to be at least partially retracted or extending from the housing 1010. For example, the flexible display 1030 may be configured to have a display area corresponding to a first width W1 from the second side surface 1042 to the fourth side surface 1044 in a retracted state.

According to an embodiment, the flexible display 1030 may be deformed to have a display area corresponding to a third width w3 greater than the first width w1 by at least a portion of the bendable member retracted inside the housing 1010 being additionally moved to the outside of the electronic device to have a second width w2 in an extended state of the slide structure 1060. Therefore, the display area of the flexible display 1030 may be variable corresponding to a variable width of the electronic device according to a sliding operation of the slide structure 1060.

According to an embodiment, the electronic device 1000 may include at least one of an input device 1003, audio output devices 1006, 1007, sensor modules 1004, 1017, camera modules 1005, 1016, a connector port 1008, a key input device (not illustrated), or an indicator (not illustrated). In an embodiment, the electronic device 600 may omit at least one of the above-described components or may additionally include other components.

According to an embodiment, the input device 1003 may include a microphone. In an embodiment, the input device 1003 may include a plurality of microphones disposed to detect a direction of sound.

According to an embodiment, the audio output devices 1006, 1007 may include speakers. The audio output devices 1006, 1007 may include an external speaker 1006 and a receiver 1007 for calls. In an embodiment, the audio output devices 1006, 1007 may include a speaker (e.g., piezo speaker) operated without a separate speaker hole.

According to an embodiment, the sensor modules 1004, 1017 may generate electrical signals or data values corresponding to an internal operation state of the electronic device 1000 or an external environmental state. The sensor modules 1004, 1017 may include, e.g., a first sensor module 1004 (e.g., proximity sensor or illuminance sensor) disposed on the front and/or a second sensor module 1017 (e.g., HRM sensor) disposed on the rear.

According to an embodiment, the first sensor module 1004 may be disposed below the flexible display 1030 on the front surface 1010a of the electronic device 1000. The first sensor module 1004 may further include at least one of a proximity sensor, an illuminance sensor, a time of flight (ToF) sensor, an ultrasonic sensor, a fingerprint recognition sensor, a gesture sensor, a gyro sensor, a barometric pressure sensor, a magnetic sensor, an acceleration sensor, a grip sensor, a color sensor, an infrared (IR) sensor, a biometric sensor, a temperature sensor, or a humidity sensor.

According to an embodiment, the camera devices 1005, 1016 may include a first camera device 1005 disposed on the front surface 1010a of the electronic device 1000 and a second camera device 1016 disposed on the rear surface 1010b. According to an embodiment, the electronic device 1000 may include a flash 1018 positioned near the second camera device 1016. According to an embodiment, the camera devices 1005, 1016 may include one or more lenses, an image sensor, and/or an image signal processor. According to an embodiment, the first camera device 1005 may be disposed below the flexible display 1030 and configured to capture a subject through a portion of an active area of the flexible display 1030. According to an embodiment, the flash 1018 may include, e.g., a light emitting diode or a xenon lamp. In an embodiment, two or more lenses (wide-angle and telephoto lenses) and image sensors may be disposed on one surface of the electronic device 1000.

According to an embodiment, the electronic device 1000 may include at least one antenna (not illustrated). According to an embodiment, the at least one antenna may, e.g., communicate wirelessly with an external electronic device or wirelessly transmit/receive power necessary for charging. In an embodiment, the antenna may include a legacy antenna, an mmWave antenna, a near field communication (NFC) antenna, a wireless charging antenna, and/or a magnetic secure transmission (MST) antenna.

According to an embodiment, the electronic device 1000 may repeat extended and retracted states by a sliding drive unit 1060, and the flexible display 1030 may be deformed. Accordingly, damage may occur in the flexible display 1030 due to tensile stress and compressive stress. Therefore, the flexible display 1030 may include a protective layer (e.g., the protective layer 310 of FIG. 4 or the protective layer 410 of FIG. 5) on one surface exposed to the outside.

According to an embodiment, by including the protective layer 310, 410 in the flexible display 1030, recovery characteristics may be provided through reversible self-healing and/or shape memory in response to damage such as wrinkles or scratches caused by deformation.

According to an embodiment, the protective layer 310, 410 may be applied to one surface not only of the flexible display 1030 sliding based on the x-axis of the electronic device 1000, but also of a flexible display sliding based on the y-axis.

A display device (e.g., the display module 160 of FIG. 1, the flexible display 260 of FIG. 2 and FIG. 3, the displays 300, 400 of FIG. 4 and FIG. 5, the flexible display 921 of FIG. 9, the flexible display 1030 of FIG. 10) according to an embodiment of the disclosure may include a display panel 350, 450 provided with a protective layer 310, 410 capable of self-healing on one surface exposed to an outside. The protective layer 310, 410 may be manufactured by a product 730 composed of methylmethacrylate (MMA), hexylmethacrylate (HMA), and cinnamoyl (Ci) mixed in a predetermined ratio capable of securing predetermined optical transparency, predetermined rigidity, or predetermined recoverability against plastic deformation.

In the display device 160, 260, 300, 400, 921, 1030 according to an embodiment of the disclosure, the molar ratio of the MMA, the HMA and the Ci constituting the product 730 may be 37:12:1 to 37.5:12.5:1.

In the display device 160, 260, 300, 400, 921, 1030 according to an embodiment of the disclosure, the product 730 may be generated from an intermediate composed of the MMA, the HMA and hydroxyethylmethacrylate (HEMA) mixed in a predetermined ratio.

In the display device 160, 260, 300, 400, 921, 1030 according to an embodiment of the disclosure, the molar ratio of the MMA, the HMA and the HEMA may be 37:12:1 to 37.5:12.5:1.

In the display device 160, 260, 300, 400, 921, 1030 according to an embodiment of the disclosure, the product 730 may form cross-linking 733a.

In the display device 160, 260, 300, 400, 921, 1030 according to an embodiment of the disclosure, the cross-linking 733a may be formed by the Ci.

In the display device 160, 260, 300, 400, 921, 1030 according to an embodiment of the disclosure, the protective layer 310, 410 may have a thickness of 30 µm to 200 µm.

In the display device 160, 260, 300, 400, 921, 1030 according to an embodiment of the disclosure, the protective layer 410 may include a secondary protective layer 4130 formed of polyethylene terephthalate (PET) material.

In the display device 160, 260, 300, 400, 921, 1030 according to an embodiment of the disclosure, the protective layer 4110 having a predetermined thickness may be provided on the front surface of the secondary protective layer 4130.

In the display device 160, 260, 300, 400, 921, 1030 according to an embodiment of the disclosure, the product 730 may be coated with a predetermined thickness on the front surface of the secondary protective layer 4130.

In the display device 160, 260, 300, 400, 921, 1030 according to an embodiment of the disclosure, the predetermined thickness may be 1 µm to 50 µm.

In the display device 160, 260, 300, 400, 921, 1030 according to an embodiment of the disclosure, the predetermined recoverability of the protective layer 310, 410 may increase under predetermined temperature conditions.

In the display device 160, 260, 300, 400, 921, 1030 according to an embodiment of the disclosure, the predetermined recoverability of the protective layer 310, 410 may increase in response to an external temperature increasing to 60°C to 75°C.

An electronic device (e.g., the electronic device 101 of FIG. 1, the electronic device 200 of FIG. 2 to FIG. 3, the electronic device 900 of FIG. 9, the electronic device 1000 of FIG. 10) according to an embodiment of the disclosure may include a first housing 210, 911, a second housing 220, 912 foldably connected to the first housing 210, 911 through a hinge module 240, 913, and a flexible display 160, 260, 300, 400, 921, 1030 supported by the first housing 210, 911 and the second housing 220, 912. The flexible display 160, 260, 300, 400, 921, 1030 may include a protective layer 310, 410 manufactured by a product 730 composed of methylmethacrylate (MMA), hexylmethacrylate (HMA), and cinnamoyl (Ci) mixed in a predetermined ratio capable of securing predetermined optical transparency, predetermined rigidity, or predetermined recoverability against plastic deformation.

In the electronic device 101, 200, 900, 1000 according to an embodiment of the disclosure, the molar ratio of the MMA, the HMA and the Ci constituting the product 730 may be 37:12:1 to 37.5:12.5:1.

In the electronic device 101, 200, 900, 1000 according to an embodiment of the disclosure, the product may be generated from an intermediate composed of the MMA, the HMA and hydroxyethylmethacrylate (HEMA) mixed in a predetermined ratio.

In the electronic device 101, 200, 900, 1000 according to an embodiment of the disclosure, the molar ratio of the MMA, the HMA and the HEMA may be 37:12:1 to 37.5:12.5:1.

In the electronic device 101, 200, 900, 1000 according to an embodiment of the disclosure, the product 730 may form cross-linking 733a by the Ci.

In the electronic device 101, 200, 900, 1000 according to an embodiment of the disclosure, the protective layer 310, 410 may have a thickness of 30 µm to 200 µm.

In the electronic device 101, 200, 900, 1000 according to an embodiment of the disclosure, the protective layer 410 may include a secondary protective layer 4130 formed of polyethylene terephthalate (PET) material.

In the electronic device 101, 200, 900, 1000 according to an embodiment of the disclosure, the protective layer 4110 having a predetermined thickness may be laminated on the front surface of the secondary protective layer 4130.

In the electronic device 101, 200, 900, 1000 according to an embodiment of the disclosure, the product 730 may be coated with a predetermined thickness on the front surface of the secondary protective layer 4130.

In the electronic device 101, 200, 900, 1000 according to an embodiment of the disclosure, the predetermined thickness may be 1 µm to 50 µm.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A display device (160, 260, 300, 400, 921, 1030) comprising:
a display panel (350, 450) provided with a protective layer (310, 410) capable of self-healing on one surface exposed to an outside,
wherein the protective layer (310, 410) is manufactured by a product (730) composed of methylmethacrylate (MMA), hexylmethacrylate (HMA), and cinnamoyl (Ci) mixed in a predetermined ratio capable of securing predetermined optical transparency, predetermined rigidity, or predetermined recoverability against plastic deformation.

2. The display device (160, 260, 300, 400, 921, 1030) of claim 1, wherein a molar ratio of the MMA, the HMA and the Ci constituting the product (730) is 37:12:1 to 37.5:12.5:1.

3. The display device (160, 260, 300, 400, 921, 1030) of claim 1 or 2, wherein the product (730) is generated from an intermediate composed of the MMA, the HMA, and hydroxyethylmethacrylate (HEMA) mixed in a predetermined ratio.

4. The display device (160, 260, 300, 400, 921, 1030) of claim 3, wherein a molar ratio of the MMA, the HMA, and the HEMA is 37:12:1 to 37.5:12.5:1.

5. The display device (160, 260, 300, 400, 921, 1030) of any one of claims 1 to 4, wherein the product (730) forms cross-linking (733a).

6. The display device (160, 260, 300, 400, 921, 1030) of claim 5, wherein the cross-linking (733a) is formed by the Ci.

7. The display device (160, 260, 300, 400, 921, 1030) of any one of claims 1 to 6, wherein the protective layer (310, 410) has a thickness of 30 micrometers (µm) to 200 µm.

8. The display device (160, 260, 300, 400, 921, 1030) of any one of claims 1 to 7, wherein the protective layer (410) includes a secondary protective layer (4130) formed of polyethylene terephthalate (PET) material.

9. The display device (160, 260, 300, 400, 921, 1030) of claim 8, wherein the protective layer (4110) having a predetermined thickness is provided on a front surface of the secondary protective layer (4130).

10. The display device (160, 260, 300, 400, 921, 1030) of claim 8 or 9, wherein the product (730) is coated with a predetermined thickness on a front surface of the secondary protective layer (4130).

11. The display device (160, 260, 300, 400, 921, 1030) of claim 9 or 10, wherein the predetermined thickness is 1 micrometer (µm) to 50 µm.

12. The display device (160, 260, 300, 400, 921, 1030) of any one of claims 1 to 11, wherein the predetermined recoverability of the protective layer (310, 410) increases under a predetermined temperature condition.

13. The display device (160, 260, 300, 400, 921, 1030) of any one of claims 1 to 11, wherein the predetermined recoverability of the protective layer (310, 410) increases in response to an external temperature increasing to 60°C to 75°C.

14. An electronic device (101, 200, 900, 1000) comprising:
a first housing (210, 911);
a second housing (220, 912) foldably connected to the first housing (210, 911) through a hinge module (240, 913); and
a flexible display (160, 260, 300, 400, 921, 1030) supported by the first housing (210, 911) and the second housing (220, 912),
wherein the flexible display (160, 260, 300, 400, 921, 1030) includes a protective layer (310, 410) manufactured by a product (730) composed of methylmethacrylate (MMA), hexylmethacrylate (HMA), and cinnamoyl (Ci) mixed in a predetermined ratio capable of securing predetermined optical transparency, predetermined rigidity, or predetermined recoverability against plastic deformation.

15. The electronic device (101, 200, 900, 1000) of claim 14, wherein a molar ratio of the MMA, the HMA and the Ci constituting the product (730) is 37:12:1 to 37.5:12.5:1.
